# EUROPEAN PATENT SPECIFICATION

(11) **EP 3 169 470 B1**
(45) Date of publication and mention of the grant of the patent: **13.06.2018**
(21) Application number: 15744418.3
(22) Date of filing: 08.07.2015
(51) Int. Cl.: B23K 9/00, B23K 9/167, B23K 9/23, B23K 35/30, C25B 11/04, B23K 101/18, B23K 103/04, B23K 103/18, B23K 101/36

(54) **METHOD OF WELDING FERRITIC STAINLESS STEEL TO CARBON STEEL USING A FILLER MATERIAL MADE OF DUPLEX STAINLESS STEEL ; CORRESPONDING WELDED ARTICLE**
VERFAHREN ZUM SCHWEISSEN VON FERRITISCHEM EDELSTAHL AN KOHLENSTOFFSTAHL MIT EINEM FÜLLMATERIAL AUS ROSTFREIEM DUPLEXSTAHL; ENTSPRECHENDER GESCHWEISSTER GEGENSTAND
PROCÉDÉ DE SOUDAGE D'ACIER INOXYDABLE FERRITIQUE À DE L'ACIER AU CARBONE À L'AIDE D'UN MATÉRIAU DE CHARGE RÉALISÉ EN ACIER INOXYDABLE DUPLEX ; ARTICLE SOUDÉ CORRESPONDANT

(30) Priority: 16.07.2014 US 201462025459 P
(43) Date of publication of application: 24.05.2017
(73) Proprietor: Chemetics Inc., Vancouver, British Columbia V5M 0A5 (CA)
(72) Inventor: KOZAK, Paul, Surrey, British Columbia V4N 5H6 (CA); TAVAKOLI, Arash, Port Moody, British Columbia V3H 4K8 (CA)
(74) Representative: Beyer, Andreas
(86) International application number: PCT/US2015/039497
(87) International publication number: WO 2016/010782

(56) References cited:
- WO-A1-2013/159219
- CN-A- 101 362 249
- CN-C- 1 216 247
- KR-A- 20030 054 561

## Description

### Technical Field

The present invention pertains to methods for welding ferritic stainless steel to carbon steel. In particular, it pertains to methods for providing corrosion resistant welds between such steels for use as cathode assemblies in industrial electrolyzers.

### Background

Numerous grades of steel and stainless steel are known in the art and variations of such steel materials continue to be developed to provide for improvements in certain properties for specific applications. These applications require an emphasis on a diverse range of characteristics and include not only sound mechanical characteristics but frequently also specialized corrosion resistance characteristics. Further, economics and other reasons can make it desirable to employ dissimilar steel materials and thus methods for joining such dissimilar steels, while maintaining their desirable characteristics are often required. In particular, maintaining acceptable corrosion resistance of joined and/or welded steel components is frequently an issue when working with dissimilar steel materials.

As a consequence, many methods have been developed in the art for joining and/or welding various dissimilar combinations of steels and stainless steels. For instance, the welding of duplex stainless steels to carbon steels has been studied and welding techniques have been developed to provide corrosion resistant welds for certain applications. Some of these techniques employ gas tungsten arc welding (i.e. GTAW or TIG welding) and use duplex stainless steels as a filler metal. In a like manner, the welding of ferritic stainless steels to carbon steels has been studied and welding techniques have been developed to provide appropriate welds for the conventional applications employing this combination of steels. To maintain acceptable weld quality, the methods of the prior art for welding ferritic stainless steel to carbon steel can employ either grades of stainless steel such as 309 or 309LMo stainless steel (austenitic grades) or grades of carbon steel as a filler metal. When using such stainless steel filler metals, GTAW is employed and when using carbon steel filler metals, gas metal arc welding (i.e. GMAW) is employed. (Carbon steel or low alloy filler metal should not be deposited on stainless steel. For such dissimilar metals, it is customary to use a stainless steel filler metal that is sufficiently high in total alloy content to prevent martensite formation when diluted with carbon steel, while at the same time preserving residual amounts of ferrite. This counteracts the tendencies for hot cracking during welding.)

An application for specialty stainless steels is for use as electrodes in industrial electrolyzers, for instance sodium chlorate electrolyzers. Sodium chlorate is produced industrially mainly by the electrolysis of sodium chloride brine to produce chlorine, sodium hydroxide and hydrogen. The chlorine and sodium hydroxide are immediately reacted to form sodium hypochlorite, which is then converted to chlorate. In the overall electrolysis process, complex electrochemical and chemical reactions are involved that are dependent upon such parameters as temperature, pH, composition and concentration of electrolyte, anode and cathode potentials and over-voltages, and the design of the equipment and electrolytic system. The choices of cell parameters such as electrode sizes, thickness, materials, anode coating options and off-gas are important to obtain optimal results.

The choice of material and configuration for the cathode electrode in the chlorate electrolyzer is particularly important with regards to the efficiency of the electrolysis and to the durability of the cathode in the harsh conditions in the electrolyzer. Material and design combinations are selected so as to obtain the best combination possible of overvoltage characteristics during operation, along with corrosion and resistance to blistering and hydrogen embrittlement, cost, manufacturability, and durability characteristics. Preferably any improved cathode electrode is able to replace those in current electrolyzer designs, without requiring other major design and material changes to other components like the carrier plates to which they are attached by welding.

Recently, as disclosed in WO2013/159219 (basis for the preamble of claims 1 and 8), improved cathodes have been discovered for use in sodium chlorate electrolyzers and other industrial processes. These cathodes use a low nickel content stainless steel (such as ferritic or certain duplex stainless steels) whose surface has been suitably modified by surface roughening. However, for economic reasons in commercial applications, it is often preferred to employ carbon steel carrier plates for the electrodes. Thus, it is desirable to be able to provide satisfactory welds between these surface modified, low nickel content stainless steel cathodes and dissimilar carbon steel carrier plates for use in commercial chlorate electrolyzers. Achieving satisfactory, long lifetime, corrosion resistant welds in such an electrochemical environment can be challenging. And although options for making such welds exist, there is a continuing need to provide for ever better results.

### Summary

The present invention addresses these needs by providing new methods for soundly welding ferritic stainless steel parts to carbon steel parts while providing improved corrosion resistances for certain applications. A method of welding a ferritic stainless steel part to a carbon steel part and a welded article according to the present invention are defined in claims 1 and 8 respectively.

Specifically, the method of welding a ferritic stainless steel part to a carbon steel part comprise arc welding the ferritic stainless steel part to the carbon steel part using a filler metal in which the filler metal is a duplex stainless steel. In particular, the arc welding method employed can be a GTAW welding method.

Suitable ferritic stainless steels include 430, 432, 434, 436, 439, 441, 442, 444, 445, and/or 446 grades and/or doped grades of ferritic stainless steel, and particularly 444 and 445 grades. Other suitable ferritic stainless steels include those comprising a stabilizing dopant (e.g. selected from the group consisting of Cu, Mo, N, Nb, Sn, Ti, V, Zr, and W). In certain embodiments, it can be preferred for the ferritic stainless steel to comprise less than about 0.03% by weight carbon, and particularly less than about 0.005% by weight carbon.

Suitable carbon steels include those with carbon content less than about 0.14%. For instance, ASTM A-516 or A-285 grades are suitable carbon steels.

Improved welded articles can be obtained when the ferritic stainless steel part is GTAW welded to the carbon steel part at a heat input in the range from about 0.4 to 1.5 kJ/mm, and particularly at a heat input in the range from about 0.7 to about 1.2 kJ/mm.

Suitable duplex stainless steel filler metals for the method include 2507/P100, 2594, and/or 2209 grades of duplex stainless steel. In certain applications and using the appropriate method and welding conditions, improved corrosion resistance can be obtained using super duplex stainless steel filler metals of 2507/P100 and/or 2594 grades of duplex stainless steel.

The invention includes welded articles generally in which a ferritic stainless steel part is welded to a carbon steel part using a duplex stainless steel filler metal. Useful applications for the invention include industrial electrolysis applications in which the ferritic stainless steel part is a cathode for an industrial electrolyzer. Such cathodes can employ an electrolysis enhancing coating and are frequently mounted in carrier plates made of carbon steel. The invention can thus provide improved cathode and carrier plate assemblies for industrial electrolyzers.

The invention is thus particularly suited for industrial applications involving sodium chlorate electrolyzers. As mentioned above, WO2013/159219 discloses improved cathodes for such electrolyzers in which the cathodes have low nickel content and have been modified or treated so as to obtain a certain surface roughness (e.g. from between about 1.0 and 5.0 micrometers). The improved cathodes include surface modified ferritic stainless steel cathodes which can desirably be attached to carbon steel carrier plates for use in a sodium chlorate electrolyzer. The present invention provides a useful method for obtaining desirable corrosion resistant cathode and carrier plate assemblies that employ improved surface modified ferritic stainless steel cathodes of WO2013/159219.

### Detailed Description

Unless the context requires otherwise, throughout this specification and claims, the words "comprise", "comprising" and the like are to be construed in an open, inclusive sense. The words "a", "an", and the like are to be considered as meaning at least one and not limited to just one.

In addition, the following definitions are intended. In a numerical context, the word "about" is to be construed as meaning plus or minus 10%.

Stainless steel refers to a steel alloy with a minimum of 10.5% chromium content by mass. Ferritic stainless steels are distinguished by the primary alloying element being chromium (ranging from about 10.5 to 30 wt%). Duplex stainless steels are also known as ferritic-austenitic stainless steels, and contain greater than 21 wt% chromium and from about 1.4 to 8 wt% nickel. Duplex stainless steel has better weld corrosion resistance than austenitic stainless steel.

Surface roughness R_{q} refers to the mean square of roughness as determined according to standards JIS2001 or ISO1997 and are what were used in the Examples below.

The method of the invention provides for quality welds between a ferritic stainless steel part and a carbon steel part. The welds have a desirable microstructure and composition and exhibit good corrosion resistance for use in industrial electrolyzer applications, and especially in sodium chlorate electrolyzers.

The method may be employed for all grades of ferritic stainless steels and carbon steels. As disclosed in WO2013/159219, exemplary ferritic stainless steels for use in improved sodium chlorate electrolyzer cathodes include 430, 432, 436, 444, 445, 446 and other grades and also certain extra low interstitial types comprising a stabilizing dopant such as Cu, Mo, N, Nb, Sn, Ti, V, and/or W. Such ferritic stainless steels typically have low carbon and can be less than about 0.03% by weight carbon, and for certain types less than about 0.005% by weight carbon. Exemplary carbon steels for use in improved sodium chlorate electrolyzer cathodes include those with carbon content less than about 0.16% and include, for instance, ASTM A-516 or A-285 grades. Other possible types include A-612 and A-537. (These steels are preferable classified as low carbon equivalent types in accordance with ASTM A20. A preferred carbon equivalent is < 0.38 wt% and more preferably < 0.36 wt% based on the actual certified chemical composition.)

In the method, the ferritic stainless steel and carbon steel parts are arc welded together (e.g. using GTAW, GMAW, MIG/MAG, SMAW, or other welding method) using a duplex stainless steel filler metal (including lean, regular, super, and hyper types). Exemplary duplex stainless steel grades include 2507/P100, 2594, and/or 2209 grades. For use in improved sodium chlorate electrolyzer cathodes, improved corrosion resistance may be obtained using 2507/P100 and/or 2594 grades of duplex stainless steel as per designation AWS A519, EN 12076, or related equivalent.

Successful welds can be obtained using GTAW welding techniques. To minimize heat related changes in the welded article, intermittent or stitch welding is generally employed where possible. For cathode and carrier plate assemblies in electrolyzers, the manual welds are typically intermittent fillet type welds. In great part, standard recommended GTAW welding conditions may be used. (The welds have a certain length and spacing between them and along the total length of perpendicular contact between electrode and carrier plate.) For instance, exemplary welding conditions include: current range of 75 to 150 Amps; voltage range of 9 to 11 Volts; welding filler wire diameter of about 2 to 3.2 mm; and 2% thoriated tungsten electrode (about 2 to 3.2 mm). Further, standard shielding gas conditions may be employed, for instance pure argon (or mixed gas with nitrogen) shield gas purge rate of 6 to 12 L/min and pure argon backing gas of 5 to 30 L/min, but for better corrosion resistance shielding gas with about 2% nitrogen may be considered. Use of a copper chill bar comprising a groove for the weld and a hole for a backing shield purge may also be considered. An optional trailing shield of argon (e.g. 8-30 L/min) and purge cup sizes from #6 to #12 may also be used.

Standard total heat inputs may also be provided to effect the weld (e.g. 1.5 kJ/mm) but total heat inputs from about 0.4 to 1.2 kJ/mm are recommended. Also, travel speeds for the GTAW welding electrode that are in the typical range generate good weld results (e.g. 0.8 to 3.4 mm/sec). The quality of the welds also depends on controlling the interpass temperature, which is preferably less than about 100 °C whenever two passes are required.

The weld quality can be verified by point counting (a very precise standardized method - ASTM E562) or by checking the ferrite content (e.g. about 42 to 50%), for instance using a FERITSCOPE® FMP30. The weld joint quality, before and after corrosion tetsing or service, can also be evaluated by mechanical properties including hardness distribution, tensile/bend tests, and Erichsen values. Analyzing the chemical composition can be used to check for undesirable impurities (abnormal levels) of C, S, P, O, and N. Also, by examining the cross-sections of weld microstructures, defects like incomplete penetration, slag inclusions, pores, and grain size damage can be detected. Yet other methods (non-destructive) include penetrant testing, radiographic testing, and ultrasonic testing which look for defects such as pores and cracks.

And, as illustrated in the following Examples, the corrosion resistance can be determined using accelerated methods. For good weldability and also to reduce the need for post-weld cleaning, all joint surfaces and the adjoining ones must be thoroughly cleaned before welding. Dirt, oil, and grease can be removed using an organic solvent (e.g. acetone) or commercial cleaning agent (e.g. Avesta Cleaner). Post-weld cleaning may also be used to achieve fully satisfactory corrosion resistance. This can be done mechanically (e.g. grinding, brushing, polishing, or blasting) and/or chemically (e.g. pickling). Post-weld heat treatment (e.g. from 900 to 1150 °C with quenching or rapid cooling) may be considered to improve the weld quality. The carrier plate can be pre-heated (e.g. 65 to 95 °C) with a gas torch prior to welding or the weld wire can be heated by applied power (e.g. 12V, 60A) during the live feed to the weld joint.

As mentioned above, the welding method of the invention is particularly useful for preparing cathode and carrier plate assemblies for sodium chlorate electrolyzers using the improved ferritic stainless steel based cathodes disclosed in WO2013/159219. These and other materials, including Ru oxide and other experimental coated materials, were unexpectedly found to be improved cathode materials if their surfaces had been appropriately modified. Overvoltages similar to or better than that obtained with carbon steel could be obtained, without an unacceptable loss of corrosion resistance, if the surfaces were roughened an appropriate amount. These improved surface modified, low nickel content stainless steel cathodes can replace present conventional carbon steel cathodes while advantageously providing better durability, cost and performance. However, stainless steel cathode options cannot be welded to conventional carbon steel carrier plates like present conventional cathode materials can (e.g. Stahrmet® cathodes can be welded to carbon steel carrier plates using carbon steel filler wire and GMAW). Instead, other welding techniques must be employed or alternatively different materials must be used for the carrier plates. The present method provides for much improved results.

The following Examples have been included to illustrate certain aspects of the invention but should not be construed as limiting in any way.

### Examples

Welded article samples were prepared using a variety of steel combinations and filler materials. These samples were then evaluated for their corrosion resistance and other characteristics for use in sodium chlorate electrolyzer applications.

The following steel materials were used in this testing:
- ASTM A-516-55 grade of carbon steel (denoted "CS")
- 430 grade ferritic stainless steel with a composition of 0.02% C, 0.33% Si, 0.40% Mn, 0.027% P, 0.001% S, 16.04% Cr, 0.21% Cu, 0.032% Mo, 0.53% Ni by weight, the remainder being Fe (denoted "430")
- 432 grade ferritic stainless steel with a composition of 0.004% C, 0.07% Si, 0.08% Mn, 0.022% P, 0.001% S, 17.20% Cr, 0% Ni, 0.18%Ti, 0.01% N, 0.48% Mo, 0.02% Cu, by weight, the remainder being Fe (denoted "432")
- 444 grade ferritic stainless steel with a composition of ≤ 0.015% C, ≤ 0.50% Si, ≤ 0.50% Mn, ≤ 0.040% P, ≤ 0.030% S, 18.00-20.00% Cr, 1.75-2.25 Mo, ≤ 0.015% N, 8(C+N) ≤ Nb, ≤ 0.20 V, by weight, the remainder being Fe (denoted "444")
- 445 grade ferritic stainless steel with a composition of ≤ 0.010% C, ≤ 1.00% Si, ≤ 1.00% Mn, ≤ 0.040% P, ≤ 0.007% S, ≤ 0.60 Ni, 22.00-23.00% Cr, 1.50-2.50 Mo, ≤ 0.020% N, 16(C+N) ≤ Nb+Ti, by weight, the remainder being Fe (denoted "445")
- a doped high purity grade of ferritic stainless steel with a composition of 0.004% C, 0.06% Si, 0.10% Mn, 0.023% P, 0.001% S, 17.32% Cr, 0.21% Sn, 0.19% Nb+Ti combined, 0.011% N, by weight, the remainder being Fe (denoted "Doped")
- LDX2101 grade of lean duplex stainless steel with a composition of 0.021% C, 0.67% Si, 5.01% Mn, 0.022% P, 0.001% S, 21.3% Cr, 1.6% Ni, 0.218% N, 0.28% Mo, 0.29% Cu, by weight, the remainder being Fe (denoted "2101 ")
- 2507/P100 grade of duplex stainless steel welding rod (as filler material) with a typical composition of 0.012% C, 0.34% Si, 0.3% Mn, 0.014% P, 0.001% S, 25.0% Cr, 9.4% Ni, 0.234% N, 3.91% Mo, 0.01% Nb+Ta combined, 0.08% Cu, by weight, the remainder being Fe (denoted "2507")
- 2209 grade of duplex stainless steel welding rod (as filler material) with a typical composition of 0.01% C, 0.4% Si, 1.6% Mn, 0.014% P, 0.017% S, 22.8% Cr, 8.7% Ni, 0.16% N, 3.1% Mo, by weight, the remainder being Fe (denoted "2209")
- 2594 grade of duplex stainless steel welding rod (as filler material) with a typical composition of 0.012% C, 0.41% Si, 0.39% Mn, 0.016% P, 0.0008% S, 25.09% Cr, 9.27% Ni, 0.24% N, 3.9% Mo, 0.085% Cu, 0.01 W by weight, the remainder being Fe (denoted "2594")
- ER309L grade of austenitic stainless steel welding rod (as filler material) with a composition of 0.016% C, 0.34% Si, 1.98% Mn, 0.019% P, 0.001% S, 23.0% Cr, 13.9% Ni, 0.062% N, 0.25% Mo, 0.10% Cu, 0.10% Co, 0.008% Al, 0.07% V, by weight, the remainder being Fe (denoted "309L").
- ER309L Mo grade of austenitic stainless steel welding rod (as filler material) with a composition of 0.008% C, 0.33% Si, 1.43% Mn, 0.019% P, 0.002% S, 21.4% Cr, 14.95% Ni, 0.061% N, 2.59% Mo, 0.08% Cu, 0.045% Co, 0.004% Al, by weight, the remainder being Fe (denoted "309L Mo").

Welded article samples were then prepared using various combinations of the above. In all cases, a representative single cathode and carrier plate assembly was prepared. The carrier plate was always slotted carbon steel plate (CS) with dimensions 8 x 2 x 1.5 cm. The cathode was a stainless steel plate (as indicated) with dimensions of 8 x 2 x 0.2 cm or 8 x 2 x 0.3 cm. All cathode plates were sandblasted prior to welding with 120 grit, AlO₂ powder on both sides such that the average surface roughness, R_{q}, was in the range of 1.6 to 2.8 um (as determined using a Mitutoyo Surftest SJ210). Cathodes were initially fitted into a carrier plate slot and stitch welded in two places using a filler material and a welding procedure as indicated below. In all cases, the weld and heat affected zone of the stainless electrode was brushed with a stainless wire brush on both the front and back sides of the weld afterwards. Normally this was done with warm surfaces (e.g. 35 to 60 °C) and being careful not to pick up iron from the carrier plate.

After preparation, the samples were subjected to an accelerated corrosion test in which individual samples were exposed to corrosive, circulating "hypo-containing" electrolyte from a pilot scale chlorate reactor. (The "hypo-containing" electrolyte comprised an approximate 4 g/L solution of HClO and NaClO, which circulated at a flow rate of 60 L/h, at about 70 - 80° C, and was obtained from the reactor operating at a current density of 4 kA/m2.) The samples were exposed to the electrolyte for a period of 3-6 hours per cycle and then visually examined for signs of corrosion (specifically in the area of the weld itself and the area of the rest of the electrode).

In a first set of tests, various ferritic and duplex stainless steels with dimensions of 8 x 2 x 0.2 cm were used as cathode materials. Samples were welded together using two different filler materials and the following welding procedures:
- Two GTAW welds were made in each case using 2.4" diameter wire filler material; the first ran from the centre of the sample to an end and the second ran from the other end back to the centre
- The range of welding voltages was from 9.3 to 10.2 V
- The welding current was 85 A
- Varied total heat inputs and travel speeds were used for each weld as indicated in Table 1 below

Table 1 below summarizes the sample combinations prepared and the results obtained from the corrosion testing in the first set of tests.

**Table 1**

| Sample # | Cathode steel | Filler material | {Total heat input; travel speed} for each weld, in {kJ/mm; mm/s} | Visual appearance of weld after corrosion testing | Visual appearance of rest of electrode after corrosion testing |
|---|---|---|---|---|---|
| C1 | 2101 | 2507 | {0.6; 1.4} | Very good | Very good |
| | | | {0.6; 1.2} | | |
| C2 | Doped | 309L | {1.2; 0.7} | Poor | Poor |
| | | | Not available | | |
| C3 | 430 | 309L | {0.9; 1.0} | Poor | Poor |
| | | | {0.7; 1.1} | | |
| C4 | 2101 | 309L | {0.8; 1.0} | Poor | Good |
| | | | {0.7; 1.1} | | |
| C5 | 430 | 309L Mo | {0.8; 1.1} | Fair | Fair |
| | | | {0.9; 0.9} | | |
| 1 | Doped | 2507 | {0.6; 1.4} | Good | Poor |
| | | | {0.9; 1.0} | | |
| 2 | 430 | 2507 | {0.8; 1.1} | Good | Poor |
| | | | {0.5; 1.7} | | |
| 3 | 430 | 2507 | {0.9; 0.9} | Good | Poor |
| | | | {0.8; 1.1} | | |

Comparative sample C1 comprised a duplex stainless steel cathode and duplex filler material. Both the weld and rest of the electrode showed minimal signs of corrosion after testing. Comparative samples C2 to C5 all used conventional 309L filler material in the welding though. Regardless of cathode steel material used (e.g. doped, 430, or 2101), the weld area showed substantial evidence of corrosion after testing. In addition, the rest of the electrodes in most of these samples showed obvious significant corrosion. The rest of the 2101 duplex electrode in comparative sample C4 showed minimal signs of corrosion though.

Inventive samples 1, 2, and 3 all showed good results at the weld area with minimal evidence of corrosion observed. However, there was obvious, substantial evidence of corrosion in the heat affected zone of the rest of the electrode area. While this is not a desirable result, it is expected that such corrosion might be successfully mitigated in an operating electrolyzer via use of cathodic protection or by using a higher alloyed grade of stainless steel for the electrode.

In addition, in some cases, an elemental analysis of the "hypo-rich" electrolyte was performed following corrosion testing to determine the type and amount of elements that had been leached from the samples. For instance, elemental analysis was performed on the electrolyte from tested comparative samples C3 and C4 which had both corroded severely at the weld. In both cases, unacceptable amounts of Ni had leached into the electrolyte. In an operating chlorate electrolyzer, such amounts in the reactor liquor could precipitate and cause the oxygen levels to rise well above normal operating levels and cause a degradation in performance.

On the other hand, elemental analysis was performed on the electrolyte from tested comparative sample C1 and also from inventive samples 1 and 2. The amounts of leached Ni were acceptable in all these cases, demonstrating weld stability of 2507 with all three types of cathode materials tested.

In a second set of tests, additional types of ferritic stainless steels with the same dimensions were used as cathodes and these were welded using duplex stainless steel filler materials. This time, the range of welding voltages was from 10.3 to 10.7 V. The welding current used was 88 A except for one indicated sample where the current was 140 A. Otherwise, the welding procedures were the same as before. And also as before, these welded cathode and carrier plate samples were then subjected to the same accelerated corrosion testing. Table 2 below summarizes the sample combinations prepared and the results obtained from the corrosion testing in the second set of tests. For some samples (as indicated), the ferrite content of the weld was determined non-destructively using a FERITSCOPE® FMP30 to check ferrite content. Additionally, a determination of weld quality was made visually and using microscopy (10-200X magnification) for cross-sections (with and without etching) of microstructures.

**Table 2**

| Sample # | Cathode steel | Filler material | {Total heat input; travel speed} for each weld, in {kJ/mm; mm/s} | Ferrite content of weld (%) | Weld quality | Visual appearance of weld after corrosion testing | Visual appearance of rest of electrode after corrosion testing |
|---|---|---|---|---|---|---|---|
| 4 | Doped | 2507 | {0.6; 1.7} | 42 | High | Good | Poor |
| | | | {0.5; 1.8} | | | | |
| 5 | 444 | 2507 | {0.4; 2.2} | 50 | High | Very good | Very good |
| | | | {0.5; 2.0} | | | | |
| 6 | 444 | 2209 | {0.4; 2.0} | 38 | Medium | Fair | Very good |
| | | | {0.5; 1.9} | | | | |
| 7 | 445 | 2209 | {0.6; 1.5} | 44 | Medium | Good | Very good |
| | | | {0.5; 1.9} | | | | |
| 8 | 432 | 2507 | {0.5; 2.0} | 60 | High | Good | Poor |
| | | | {0.4; 2.3} | | | | |
| 9 | 445 | 2507 | {0.6; 1.7} | 57 | High | Very good | Very good |
| | | | {0.5; 1.9} | | | | |
| 10 | 444 | 2507 | {0.5; 1.8} | 43 | High | Very good | Very good |
| | | | {0.5; 1.8} | | | | |
| 11* | Doped | 2594 | {0.2; 6.8}* | 55 | High | Good | Poor |
| | | | {0.2; 6.8}* | | | | |

| | | | | | | | |
|---|---|---|---|---|---|---|---|
| * Welding current was 140 A for both welds | | | | | | | |

As is evident from Table 2, superior welds were obtained in all cases for all the ferritic grade cathode materials tested when 2507 welding wire (filler) was used (e.g. ferrite content was always between 20 and 70%). However, test samples prepared with 2209 welding wire (which has lower Cr, Ni, and Mo but higher Mn than 2507) resulted in somewhat inferior welds to those made with 2507.

After corrosion testing, samples 4 and 11 which employed the doped steel cathode again good results at the weld but poor results over the rest of the electrode. Again, this lower grade ferritic alloy showed severe pitting corrosion in the heat affected zones during the ACT, but the weld was not attacked. (Again, cathodic protection may be expected to mitigate the observed pitting corrosion.) Superior results when using 444 or 445 cathode materials and 2507 welding wire (e.g. samples 5, 9, and 10 showed good to very good corrosion resistance everywhere). Results (samples 6 and 7) when using 2209 welding wire were acceptable but not as good as when 2507 welding wire was used with the same cathodes.

In a third set of tests, an additional 444 ferritic stainless steel electrode of thicker dimension 8 x 2 x 0.3 cm was welded to certain of the samples previously prepared and tested according to Table 2. In all cases, a single extra 444 cathode was welded using 2507 welding wire on the opposite side of the carbon steel carrier plate. The range of welding voltages here was from 10.2 to 11.5 V. The welding current again was 88 A. Otherwise, the welding procedures were the same as before. These samples comprising two welded cathodes were then subjected again to accelerated corrosion testing. Table 3 below summarizes the sample information and the results obtained from the corrosion testing in this third set of tests. As in the second set of tests, a determination of weld quality was also made here.

**Table 3**

| Sample # | Extra cathode steel | Filler material | {Total heat input; travel speed} for extra weld, in {kJ/mm; mm/s} | Ferrite content of weld (%) | Weld quality | Visual appearance of welds after corrosion testing | Visual appearance of rest of each electrode after corrosion testing |
|---|---|---|---|---|---|---|---|
| 5+ | 444 | 2507 | {0.8; 1.1} | 58 | High | 1^{st}: Good | 1^{st}: Good |
| | | | | | | 2^{nd}: Very good | 2^{nd}: Very good |
| 6+ | 444 | 2507 | {0.8; 1.3} | 59 | High | 1^{st}: Fair | 1^{st}: Very good |
| | | | | | | 2^{nd}: Very good | 2^{nd}: Very good |
| 8+ | 444 | 2507 | {1.2; 0.8} | 55 | High | 1^{st}: Good | 1^{st}: Very poor |
| | | | | | | 2^{nd}: Very good | 2^{nd}: Very good |
| 10+ | 444 | 2507 | {0.7; 1.3} | 58 | Medium | 1^{st}: Good | 1^{st}: Very good |
| | | | | | | 2^{nd}: Good | 2^{nd}: Very good |

Table 3 shows that superior welds were again obtained for most of the samples. Inventive sample 10+ however appeared only of medium quality as there were some minor pits in a few areas where there was either too little filler, a discontinuity in travel, or where there was an underlying tack weld that was not fully cooled or cleaned.

After corrosion testing, all the inventive samples 5+, 6+, 8+, and 10+ showed good to very good corrosion resistance results at all of the weld sites and very good results over the rest of all the 2^{nd} electrodes.

These examples demonstrate the effectiveness of the welding method of the invention and the resistance to corrosion it provides. In particular, quite superior results were obtained here using 444 or 445 cathode electrodes which had been welded with 2507 duplex filler.

While particular elements, embodiments and applications of the present invention have been shown and described, it will be understood, of course, that the invention is not limited thereto since modifications may be made by those skilled in the art without departing from the scope of the present disclosure as defined in the appended claims, particularly in light of the foregoing teachings. For instance, while the preceding description and examples were directed at sodium chlorate electrolysers, the invention might instead be useable for welded joints in other industrial electrochemical processing equipment in which water or an aqueous solution is electrolyzed, e.g. hydrogen electrolysis, desalination of seawater, or electrolysis of an aqueous solution of an acid or an alkali metal chloride. For instance, aqueous acidic solutions are electrolyzed in electrowinning, electrotinning and electrogalvanizing processes. Aqueous alkali metal chloride solutions are electrolyzed in the production of chlorine, alkali metal hydroxide, and alkali metal hypochlorite. The invention can also be used for other electrochemical applications, which may or may not employ impermeable ion exchange membrane separators and which require an active, low cost, chemically resistant cathode electrode material, e.g. the electrolysis of non-aqueous electrolytes and electrosynthesis, or possibly in certain batteries or fuel cells. Such modifications are to be considered within the purview and scope of the claims appended hereto.

## Claims

1. A method of welding a ferritic stainless steel part to a carbon steel part comprising:
arc welding the ferritic stainless steel part to the carbon steel part using a filler metal **characterised in that** the filler metal is a duplex stainless steel.

2. The method of claim 1 comprising GTAW welding the ferritic stainless steel part to the carbon steel part.

3. The method of claim 1 wherein the ferritic stainless steel is a 430, 432, 434, 436, 439, 441, 442, 444, 445, or 446 grade or a doped grade of ferritic stainless steel, preferably a 444 or 445 grade of ferritic stainless steel.

4. The method of claim 1 wherein the ferritic stainless steel comprises less than about 0.03% by weight carbon, preferably less than about 0.005% by weight carbon.

5. The method of claim 1 wherein the carbon steel is an A-516 or A-285 grade of carbon steel.

6. The method of claim 2 comprising:
GTAW welding the ferritic stainless steel part to the carbon steel part with a heat input in the range from about 0.4 to 1.5 kJ/mm, preferably with a heat input in the range from about 0.7 to 1.2 kJ/mm.

7. The method of claim 1 wherein the duplex stainless steel is 2507/P100, 2594, or 2209 grade of duplex stainless steel, and preferably is 2507/P100 or 2594 grade of duplex stainless steel.

8. A welded article comprising a ferritic stainless steel part welded to a carbon steel part with a filler metal **characterised in that** the filler metal is a duplex stainless steel.

9. The welded article of claim 8 wherein the ferritic stainless steel part is a cathode for an industrial electrolyzer.

10. The welded article of claim 9 wherein the cathode comprises an electrolysis enhancing coating,
and/or wherein the carbon steel part is a carrier plate for the cathode of the industrial electrolyzer.

11. The welded article of claim 8 wherein the ferritic stainless steel is a 430, 432, 436, 444, or 445 grade of ferritic stainless steel,
and/or wherein the carbon steel is an A-516 or A-285 grade of carbon steel,
and/or wherein the duplex stainless steel is 2507/P100, 2594, or 2209 grade of duplex stainless steel.

12. An industrial electrolyzer comprising the welded article of claim 8.

13. The industrial electrolyzer of claim 12 wherein the welded article is a cathode and carrier plate assembly.

14. The industrial electrolyzer of claim 13 wherein the industrial electrolyzer is a sodium chlorate electrolyzer.

## Patentansprüche

1. Verfahren zum Schweißen eines Teils aus ferritischem Edelstahl an ein Teil aus Kohlenstoffstahl, umfassend:
Lichtbogenschweißen des Teils aus ferritischem Edelstahl an das Teil aus Kohlenstoffstahl unter Verwendung eines Schweißzusatzwerkstoffes,
**dadurch gekennzeichnet, dass** der Schweißzusatzwerkstoff ein rostfreier Duplexstahl ist.

2. Verfahren nach Anspruch 1, umfassend ein Wolfram-Inertgas-Schweißen des Teils aus ferritischem Edelstahl an das Teil aus Kohlenstoffstahl.

3. Verfahren nach Anspruch 1, bei dem der ferritische Edelstahl ein ferritischer Edelstahl der Sorte 430, 432, 434, 436, 439, 441, 442, 444, 445 oder 446 oder ein dotierter ferritischer Edelstahl ist, vorzugsweise ein ferritischer Edelstahl der Sorte 444 oder 445.

4. Verfahren nach Anspruch 1, bei dem der ferritische Edelstahl weniger als etwa 0,03 Gewichtsprozent Kohlenstoff, vorzugsweise weniger als etwa 0,005 Gewichtsprozent Kohlenstoff enthält.

5. Verfahren nach Anspruch 1, bei dem der Kohlenstoffstahl ein Kohlenstoffstahl der Sorte A-516 oder A-285 ist.

6. Verfahren nach Anspruch 2, umfassend:
Wolfram-Inertgas-Schweißen des Teils aus ferritischem Edelstahl an das Teil aus Kohlenstoffstahl mit einer Wärmezufuhr in dem Bereich von etwa 0,4 bis 1,5 kJ/mm, vorzugsweise mit einer Wärmezufuhr in dem Bereich von etwa 0,7 bis 1,2 kJ/mm.

7. Verfahren nach Anspruch 1, wobei der rostfreie Duplexstahl ein rostfreier Duplexstahl der Sorte 2507/P100, 2594 oder 2209 ist, und vorzugsweise ein rostfreier Duplexstahl der Sorte 2507/P100 oder 2594 ist.

8. Geschweißter Gegenstand mit einem Teil aus ferritischem Edelstahl, das mit einem Schweißzusatzwerkstoff an ein Teil aus Kohlenstoffstahl geschweißt ist, **dadurch gekennzeichnet, dass** der Schweißzusatzwerkstoff ein rostfreier Duplexstahl ist.

9. Geschweißter Gegenstand nach Anspruch 8, wobei das Teil aus ferritischem Edelstahl eine Kathode für einen großtechnischen Elektrolyseur ist.

10. Geschweißter Gegenstand nach Anspruch 9, wobei die Kathode eine elektrolysefördernde Beschichtung aufweist,
und/oder wobei das Teil aus Kohlenstoffstahl eine Trägerplatte für die Kathode des großtechnischen Elektrolyseurs ist.

11. Geschweißter Gegenstand nach Anspruch 8, wobei der ferritische Edelstahl ein ferritischer Edelstahl der Sorte 430, 432, 436, 444 oder 445 ist,
und/oder wobei der Kohlenstoffstahl ein Kohlenstoffstahl der Sorte A-516 oder A-285 ist,
und/oder wobei der rostfreie Duplexstahl ein rostfreier Duplexstahl der Sorte 2507/P100, 2594 oder 2209 ist.

12. Großtechnischer Elektrolyseur, umfassend den geschweißten Gegenstand nach Anspruch 8.

13. Großtechnischer Elektrolyseur nach Anspruch 12, wobei der geschweißte Gegenstand ein Aufbau aus Kathode und Trägerplatte ist.

14. Großtechnischer Elektrolyseur nach Anspruch 13, wobei der großtechnische Elektrolyseur ein Natriumchlorat-Elektrolyseur ist.

## Revendications

1. Procédé de soudage d'une pièce en acier inoxydable ferritique à une pièce en acier au carbone comprenant :
le soudage à l'arc de la pièce en acier inoxydable ferritique à la pièce en acier au carbone à l'aide d'un métal d'apport **caractérisé en ce que** le métal d'apport est un acier inoxydable duplex.

2. Procédé selon la revendication 1 comprenant le soudage GTAW de la pièce en acier inoxydable ferritique à la pièce en acier au carbone.

3. Procédé selon la revendication 1, dans lequel l'acier inoxydable ferritique est une qualité 430, 432, 434, 436, 439, 441, 442, 444, 445 ou 446, ou une qualité dopée d'acier inoxydable ferritique, de préférence une qualité 444 ou 445 d'acier inoxydable ferritique.

4. Procédé selon la revendication 1, dans lequel l'acier inoxydable ferritique comprend moins d'environ 0,03 % en poids de carbone, de préférence moins d'environ 0,005 % en poids de carbone.

5. Procédé selon la revendication 1, dans lequel l'acier au carbone est une qualité A-516 ou A-285 d'acier au carbone.

6. Procédé selon la revendication 2 comprenant :
le soudage GTAW de la pièce en acier inoxydable ferritique à la pièce en acier au carbone avec un apport de chaleur dans la plage d'environ 0,4 à 1,5 kJ/mm, de préférence avec un apport de chaleur dans la plage d'environ 0,7 à 1,2 kJ/mm.

7. Procédé selon la revendication 1, dans lequel l'acier inoxydable duplex est une qualité 2507/P100, 2594 ou 2209 d'acier inoxydable duplex, et de préférence est une qualité 2507/P100 ou 2594 d'acier inoxydable duplex.

8. Article soudé comprenant une pièce en acier inoxydable ferritique soudée à une pièce en acier au carbone avec un métal d'apport **caractérisé en ce que** le métal d'apport est un acier inoxydable duplex.

9. Article soudé selon la revendication 8, dans lequel la partie en acier inoxydable ferritique est une cathode pour un électrolyseur industriel.

10. Article soudé selon la revendication 9, dans lequel la cathode comprend un revêtement améliorant l'électrolyse,
et/ou dans lequel la pièce en acier au carbone est une plaque de support pour la cathode de l'électrolyseur industriel.

11. Article soudé selon la revendication 8, dans lequel l'acier inoxydable ferritique est une qualité 430, 432, 436, 444 ou 445 d'acier inoxydable ferritique,
et/ou dans lequel l'acier au carbone est une qualité A-516 ou A-285 d'acier au carbone,
et/ou dans lequel l'acier inoxydable duplex est une qualité 2507/P100, 2594 ou 2209 d'acier inoxydable duplex.

12. Électrolyseur industriel comprenant l'article soudé selon la revendication 8.

13. Électrolyseur industriel selon la revendication 12, dans lequel l'article soudé est un ensemble de cathode et de plaque de support.

14. Électrolyseur industriel selon la revendication 13, dans lequel l'électrolyseur industriel est un électrolyseur au chlorate de sodium.
